(19) Europäisches Patentamt
European Patent Office
Office européen des brevets

(11) Publication number : 0 566 295 A2

(12) # EUROPEAN PATENT APPLICATION

(21) Application number : 93302651.0

(22) Date of filing : 05.04.93

(51) Int. Cl.$^5$ : **C08L 51/00**, C08F 2/44

(30) Priority : 13.04.92 US 867853

(43) Date of publication of application : 20.10.93 Bulletin 93/42

(84) Designated Contracting States : BE DE FR GB IT NL

(71) Applicant : ROHM AND HAAS COMPANY
Independence Mall West
Philadelphia Pennsylvania 19105 (US)

(72) Inventor : Shah, Nilesh
27 Terrapin Lane
Hamilton, New Jersey 08619 (US)
Inventor : Buhse, Lucinda Fisher
1463 Wheaton Lane
North Wales, Pennsylvania 19454 (US)
Inventor : Kirk, Andrea Beth
2635 Arrowhead Drive
Langhorne, Pennsylvania 19053 (US)

(74) Representative : Angell, David Whilton et al
ROHM AND HAAS (UK) LTD. European Operations Patent Department Lennig House
2 Mason's Avenue
Croydon CR9 3NB (GB)

(54) **Acrylic modifiers and blends.**

(57) Weatherable polymer compositions containing multi-stage modifier polymer have improved weathering characteristics when the weather stabilizer is located in an acrylic elastomeric stage of the multi-stage polymer.

EP 0 566 295 A2

This invention is concerned with weatherable acrylic polymer compositions and blends containing them. The acrylic polymer compositions are multi-stage polymers having a weather stabilizer incorporated directly therein.

Achieving improved weatherability of plastic compositions is a constant goal of the plastics art. "Improved weatherability" generally means the improved resistance to degradation of the physical properties of a given plastic material resulting from its exposure to natural elements, especially to ultraviolet (UV) radiation. Physical properties commonly affected by UV radiation, moisture, oxygen, heating and cooling, and other natural exposures, include those properties for which plastics are so well known and useful, for example, their impact resistance, their relatively low permeability to moisture and gases, and particularly their clarity and color retention properties. Weather stabilizers from several chemical classes of compounds, such as benzotriazoles, hindered amine stabilizers, and hindered phenolic anti-oxidants have proven particularly effective in improving the inherent, relatively good weather resistance of acrylic polymers. Incorporating UV stabilizers, anti-oxidants and other weather stabilizers into acrylic polymers and copolymers conventionally has been accomplished during blending, milling, extruding or other post-preparative operations.

U.S. -A 3,793,402, discloses that materials which stabilize products and which inhibit oxidative, thermal, and UV light degradation, are ordinarily incorporated into a "composite interpolymer" and blends of the interpolymer, and furthermore may be included at any stage of the polymerization process in which the composite interpolymers are made. Although this disclosure broadly states that stabilizers may be incorporated during the polymerization process, specific benefits of doing so in any particular stage or point in the process were not disclosed or implied. U.S.-A-4,521,568 disclosed a stabilizing advantage by incorporating stabilizer specifically in the third stage of a sequentially produced multilayer acrylic thermoplastic resin composition.

This invention is addressed to the problem of improving the weather stability of acrylic multi-stage polymers.

We have found that weather stability of certain weather-stabilised multi-stage acrylic polymers may be further improved by incorporating the weather stabiliser into an acrylic elastomeric stage thereof, rather than in the stage(s) hitherto used. Inclusion of weather stabiliser in other stages, while not necessary according to the invention, is however not precluded.

In particular, according to this invention, improved weatherable compositions and blends may be achieved through stabilized acrylic polymer compositions, specifically multi-stage acrylic polymers and copolymers, which are obtained by including certain types of weather stabilizers within the "rubber," or "elastomeric," stage of the multi-stage polymer. As will be further described, the multi-stage acrylic polymers have an acrylic elastomeric stage containing an effective amount of one or more weather stabilizer incorporated in the elastomeric stage; and one or more relatively hard "outer stage." Further, the multi-stage poly may, optionally have a hard or a soft acrylic "first stage" (or "core"). It has been discovered that weathering advantageously is improved in polymer blends which contain these multi-stage polymers, as shown by decreased loss of measurable appearance properties upon aging, as measured by light transmittance, haze and yellowness index, in comparison with property loss experienced by control blends having the same weather stabilizer present in other, less effective stages of their composition. It is another advantage that less weather stabilizer may be required in the compositions of the invention than required in conventional compositions to give an equivalent, and in some instances, an improved, weathering effect to their blends.

In its broadest scope, there is provided a multi-stage acrylic composition, comprising (a) from about 40 to about 85 weight percent of acrylic elastomeric stage polymer containing from about 0.05 to about 2.0 weight percent, based on the elastomeric stage polymer, of one or more weather stabilizer; and (b) from about 15 to about 60 weight percent of at least one outer stage polymer (polymerized in the presence of the elastomeric stage polymer) having a glass transition temperature, Tg, greater than 25° C the weight percentages being based upon the total of (a) plus (b).

The multi-stage acrylic composition also may comprise (c) first stage polymer which is either hard polymer having Tg greater than 25°C, comprising from about 5 to about 40 weight percent of (a) plus (b) plus (c) or soft polymer having Tg less than 0° C comprising from about 5 to about 20 weight percent of (a) plus (b) plus (c).

Blends of these multi-stage acrylic compositions with certain thermoplastic, predominantly acrylic polymers and copolymers, as will be described, show improved properties responsive to weathering. Articles prepared from the blends thus have prolonged useful applications where appearance properties are important, such as in clear glazing, lighting fixtures, automotive lenses and outdoor signs.

In one preferred embodiment of the invention, a multi-stage acrylic composition has a first stage hard polymer. That multi-stage composition comprises:

(a) the first stage hard polymer polymerized from one or more monomers, based on the weight of the first stage polymer, comprising from about 70 to about 100 weight percent of $(C_1 - C_{18})$alkyl methacrylate or a comonomer mixture comprising at least about 50 weight percent of $(C_1 - C_{18})$alkyl methacrylate and as

first monoethylenically unsaturated comonomer, styrene, substituted styrene, acrylonitrile and/or methacrylonitrile; up to about 30 weight percent of second monoethylenically unsaturated monomer; up to about 5 weight percent of polyfunctional crosslinking monomer; and up to about 5 weight percent of graftlinking monomer;

(b) the weather stabilizer-containing acrylic elastomeric stage polymer polymerized from one or more monomers, comprising: from about 50 to about 99.9 weight percent of alkyl acrylate wherein the alkyl contains 1 to 8 carbon atoms or mixtures thereof, up to about 49.9 weight percent of second monoethylenically unsaturated monomer, up to about 5 weight percent of polyfunctional crosslinking monomer (as later defined), and 0.05 to 5.0 weight percent of graftlinking monomer (as later defined); the elastomeric stage polymer polymerized in the presence of the first stage hard polymer and characterized in that it would exhibit a Tg of 25° C or less if its monomers were polymerized in the absence of the first stage polymer; and

(c) the at least one outer stage polymer polymerized from one or more monomers, based on the weight of the outer stage, comprising: from about 70 to about 100 weight percent of ($C_1$ - $C_{18}$)alkyl methacrylate or a comonomer mixture comprising at least 50 weight percent of the ($C_1$ - $C_{18}$)alkyl methacrylate and at least one monoethylenically unsaturated monomer selected from styrene, substituted styrene, acrylonitrile, methacrylonitrile, or combinations thereof; and up to about 30 weight percent of a second monoethylenically unsaturated monomer; the at least one outer stage polymer characterized in that it would exhibit a Tg greater than 25° C if the monomers were polymerized in the absence of the first and elastomeric stage polymers.

Another embodiment has a first stage soft polymer in place of the first stage hard polymer. This embodiment is otherwise identical to the above-described, first hard stage embodiment, except for its first stage which comprises a first stage soft polymer polymerized from one or more monomers, based on the weight of the first stage polymer, comprising from about 70 to about 100 weight percent of ($C_1$ - $C_8$)alkyl acrylate or mixtures thereof, or a comonomer mixture comprising at least about 50 weight percent of the ($C_1$ - $C_8$)alkyl acrylate and at least one monoethylenically unsaturated monomer selected from styrene, substituted styrene, acrylonitrile, methacrylonitrile, or combinations thereof; up to about 30 weight percent of a second monoethylenically unsaturated monomer; up to about 5 weight percent of a polyfunctional crosslinking monomer; and up to about 5 weight percent of a graftlinking monomer.

The multi-stage acrylic polymer composition of the present invention may be made by any convenient technique for preparing multi-stage, also termed "sequential," polymers. One technique, for example, is by emulsion polymerizing a subsequent stage mixture of monomers in the presence of a previously formed polymer stage. In this disclosure, the term "sequentially emulsion polymerized" or "multi-stage polymerized" refers to polymers (which term includes copolymers) which are prepared in aqueous dispersion or emulsion and in which one or more successive monomer charges are polymerized onto or in the presence of a preformed "latex," or "latex polymer," that is, the dispersion or emulsion polymer resulting from the polymerization of a prior monomer charge. In this type of sequential polymerization, the succeeding stage is attached to and intimately associated with the preceding stage. Thus, the sequentially prepared, or multi-stage, polymers of the present invention are made by a process in which the total dispersion or emulsion particle content remains substantially constant upon completion of the polymerization of the first-stage, that is, new or additional particles generally are not formed after the first-stage particles are formed. Processes of preparing the multi-stage polymers used in the invention are described by Owens in U.S. -A 3,793,402, which should be consulted for more details.

The multi-stage, or sequential, polymerizations are carried out in the presence of a catalyst and may include a polymerization regulator which serves as a chain transfer agent. The final mean particle size of the multi-stage polymer may vary from about 100 to about 350 nm. with a preferred range being about 160 to 300 nm. There also may be added to the multi-stage polymers, after polymerization, light stabilizers, oxidation inhibitors such as hydroquinone or one of the amine type rubber antioxidants, fillers, coloring pigments or other colorants, and other additives commonly used in the plastics art.

The acrylic elastomeric stage is prepared either as a "first" stage of the multi-stage polymer or as a "second" stage in the presence of a hard or soft first stage polymer, as described herein. An essential requirement of the invention for achieving the improved weathering properties of either the multi-stage composition or blends thereof is that weather stabilizer is incorporated into the elastomeric stage. This is accomplished by including weather stabilizer in the monomer or comonomer mixture prepared for use in the elastomeric stage, and then by subsequently adding the resulting monomer mixture containing weather stabilizer before or during polymerization of the elastomeric stage. Polymerization of the elastomeric stage follows the polymerization of a prior, i.e. a "first" stage if present. Preparation of the elastomeric stage is described in more detail below, following the detailed description of either a hard or a soft first stage which is used when a first stage other than an elastomeric stage is incorporated into one or more embodiments of the invention.

The first stage of the hard core embodiment of the invention was broadly described above. Examples of

$(C_1 - C_{18})$alkyl methacrylates used in the hard first stage include methyl methacrylate, ethyl methacrylate, isopropyl methacrylate, normal-butyl methacrylate, sec-butyl methacrylate, tert-butyl methacrylate, cyclohexyl methacrylate, iso-bornyl methacrylate, and stearyl methacrylate. Alkyl methacrylates having $(C_1 - C_4)$alkyl groups are preferred. The substituted styrenes include α-methylstyrene, halostyrene, e.g. monochlorostyrene; tert-butylstyrene, and vinyl toluene. Polymer formed in the first hard stage must have a glass transition temperature greater than 25°C, preferably greater than 60°C. (Glass transition temperatures and their determination are well known to those skilled in the art, as evidenced by Polymer Handbook, Brandrup et al., Interscience Publishers, div. of J. Wiley and Sons, Inc. (1975), pp. III - 139 to 192, and references therein.) In the multistage polymer composition containing a first hard stage, the hard stage is present at levels between about 5 to about 40 weight percent of the weight of the multi-stage polymer composition.

One example of a hard first stage monomer mixture may have 85 to 99.9 weight percent of an alkyl methacrylate, styrene, substituted styrene, acrylonitrile, methacrylonitrile or combinations thereof, 0.1 to 15 weight percent of an other copolymerizable monoethylenically unsaturated monomer, 0.05 to 5.0 weight percent of crosslinking monomer and 0.05 to 5.0 weight percent of a graftlinking monomer. Another hard first stage example is polymerized from 70 to 95 weight percent alkyl methacrylate and 5 to 30 weight percent of a selected monoethylenically unsaturated monomer such as styrene or a substituted styrene. Another typical hard first stage is polymerized from 70 to 95 weight percent alkyl methacrylate, 5 to 30 weight percent of a selected monoethylenically unsaturated monomer, and 0.5 to 2.0 weight percent of polyfunctional crosslinking monomer. A preferred first stage hard polymer is polymerized from about 95 to about 100 weight percent methyl methacrylate. For example, a typical hard first stage for a suitable system is polymerized from 99.5 to 98 weight percent alkyl methacrylate and 0.5 to 2.0 weight percent polyfunctional crosslinking monomers. Another typical hard first stage is polymerized from 98 to 99.8 weight percent alkyl methacrylate, preferably methyl methacrylate, and 0.2 to 2.0 weight percent of the copolymerizable allyl, methyllal or crotyl ester of an α,β-unsaturated carboxylic acid or diacid, preferably allyl methacrylate or diallyl maleate.

A second group of monoethylenically unsaturated monomers, which second group includes the alkyl methacrylate monomers, styrene, substituted styrene, acrylonitrile, and methacrylonitrile already described for the first stage hard polymer, also includes acrylic monomers such as lower alkyl acrylates, lower alkoxy acrylates, cyanoethyl acrylate, acrylamide, hydroxy lower alkyl acrylates, hydroxy lower alkyl methacrylates, acrylic acid, and methacrylic acid. "Lower" alkyl or "lower" alkoxy as used in describing the acrylic monomers of this second monomer group means those alkyl or alkoxy groups having from 1 to 8 carbon atoms.

As used in the specification and claims attached hereto, the term "crosslinking monomer" includes difunctional crosslinking monomers, that is, monomers containing two free-radical reactive, or "functional," groups, as well as those crosslinking monomers containing more than two reactive or functional groups. It is a requirement of crosslinking monomer that substantially all of its unsaturated groups have sufficiently similar reactivity that they react during the formation of the same polymer stage, so that the crosslinker monomer units in the polymer are predominantly linked chemically to that single stage. The following are monomers, which are to be regarded as crosslinking monomer and as such useful for addition to a first stage: an alkylene glycol dimethacrylate such as ethylene glycol dimethacrylate; 1,3-butylene glycol dimethacrylate; 1,4-butylene glycol dimethacrylate, or propylene glycol dimethacrylate. In a first stage wherein a mixture of monomers is used, a mixture of crosslinking monomers also may be preferred.

The first stage, hard or soft, polymer may be polymerized from monomer mixtures containing a graftlinking monomer which is monomer containing reactive groups of sufficiently different reactivity that residual unsaturation remains after the formation of the polymer stage to which the graftlinker is added to that graftlinker units in the polymer are predominantly chemically linked to at least two adjacent stages. The following monomers are to be regarded as preferred graftlinking monomers: copolymerizable allyl, methylal or crotyl esters of α,β-unsaturated carboxylic acids or diacids; of which the following are more preferred: allyl esters of acrylic acid, methacrylic acid, maleic acid and fumaric acid. (Other suitable graftlinkers are disclosed by Owens in U.S. -A 3,808,180.)

The first stage soft polymer (or "soft core") of an embodiment of the invention has been described above. Useful second monoethylenically unsaturated monomers, polyfunctional crosslinkers, and graftlinking monomers are the same as those described for use in the first stage hard monomer. An example of a representative soft first stage monomer mixture may have 85 to 99.9 weight percent of the alkyl acrylate, styrene, substituted styrene, acrylonitrile, methacrylonitrile or combinations thereof, 0.1 to 15 weight percent of a second copolymerizable monoethylenically unsaturated monomer, 0.05 to 5.0 weight percent of a crosslinking monomer and 0.05 to 5.0 weight percent of a graftlinking monomer. Preferred acrylic monomers for the soft first stage polymer are ethyl acrylate, n-butyl acrylate, iso-butyl acrylate, and 2-ethylhexyl acrylate.

The weather stabilizer-containing elastomeric stage polymer of the invention has been described broadly above. It may be polymerized in the presence of either a hard first stage polymer, a soft first stage polymer,

or no first stage polymer. Suitable alkyl acrylates for the monomer mixture from which the elastomeric stage polymer is prepared are those having 1 to 8 carbon atoms in the alkyl group. The alkyl group may be a straight or branched chain. Preferred alkyl acrylates are ($C_2$ - $C_8$)alkyl acrylates such as ethyl acrylate, n-butyl acrylate, iso-butyl acrylate, and 2-ethylhexyl acrylate. Straight chain alkyl acrylate is most preferred, and among these is n-butyl acrylate. In the elastomeric stage, hydroxy lower alkyl acrylates, hydroxy lower alkyl methacrylates, acrylonitrile, styrene and substituted styrenes (as described above for the first stage hard monomers) are examples of suitable types of copolymerizable monoethylenically unsaturated monomers, with styrene and substituted styrene being preferred. The second monoethylenically unsaturated monomers useful in the elastomeric stage are the same as those described in the hard or soft first stage, above.

The preferred crosslinking monomer for the elastomer stage is an alkylene glycol diacrylate such as ethylene glycol diacrylate; 1,2- or 1,3-propylene glycol diacrylate; and 1,3- or 1,4-butylene glycol diacrylate. For an all-acrylic system the most preferred acrylate is n-butyl acrylate and the most preferred polyfunctional crosslinking monomer is 1,3-butylene glycol diacrylate. The graftlinking monomers useful in preparing the elastomeric stage polymer are those which have been described for use in preparing the hard or soft first stage polymer.

As stated above, the elastomers of this stage have a glass transition temperature of 25°C. or less, and preferred are those elastomers having a glass temperature less than about 10°C. These described glass temperatures refer to the elastomeric portion of the multi-stage composition only and do not include any subsequent stages or other polymers attached physically or chemically onto or into the particles of the elastomer and are those temperatures which would characterize the elastomers if its monomers were reacted in the absence of any other polymeric product.

The outer stage polymer, of which there is at least one and of which there may be two or more (termed "second," or "third," etc., outer stage), is described broadly above. Preferably, the outer stage monomers are selected from an alkyl methacrylate wherein the alkyl group has 1 to 4 carbon atoms, more preferably one carbon atom, or a comonomer mixture comprising at least about 50 weight percent of the preferable alkyl methacrylate and at least one other from styrene, substituted styrene, acrylonitrile, methacrylonitrile and combinations thereof. The outer stage also may contain 0 to 5 weight percent of a polyfunctional crosslinking monomer. It is preferred that the final, or last, of the at least one outer stage have a composition similar to the composition of the thermoplastic polymer into which the multi-stage composition is to be blended, except for the addition of polyfunctional crosslinking monomer and/or chain transfer agents including mercaptans, polymercaptans, and polyhalogen compounds. In general, however, neither the final nor any previously formed outer stage(s) need be polymerized from the same monomers as of the to-be blended thermoplastic polymer, nor need the particular outer stages, when there are more than one, be polymerized from the same monomers or in the same proportions.

Examples of the alkyl methacrylates which can be used in the at least one outer stage include those alkyl methacrylate monomers described for the hard first stage polymer and preferably include methyl methacrylate, ethyl methacrylate, isopropyl methacrylate, and butyl methacrylate. Suitable alkyl acrylates are those having 1 to 4 carbon atoms in the alkyl group. Ethyl acrylate is a preferred alkyl acrylate for this stage in combination with methyl methacrylate. A preferred final stage for an all-acrylic system is 90 to 99.5 weight percent methyl methacrylate and 0.5 to 10 weight percent of alkyl acrylate. A significant limitation on the character of the at least one outer stage is its glass transition temperature ($T_g$). The $T_g$ of the at least one outer stage should be greater than 25°C., preferably greater than 50°C.

For the preparation of a blended composition that is transparent, that is, having a luminous transmittance of at least about 75%, it is important to control the refractive indices and/or the particle size of the multi-stage polymer. Control of the refractive index of such polymers is accomplished by balancing the various proportions of the diverse monomers. Control of particle size is accomplished by balancing emulsifier type and content, initiator type and content, and temperature, as is known and practiced by those skilled in the art.

A preferred multi-stage polymer of this invention is a three stage polymer consisting of a non-elastomeric first stage, a second elastomeric stage and a final, relatively hard stage. However, so long as at least three such stages are present in the sequence:- (1) hard or soft stage (2) elastomeric stage (3) hard stage, the present invention also encompasses multi-stage polymers of any number of stages greater than three so long as the weather stabilizer is incorporated specifically in the "elastomeric" stage or stages as herein described. Thus this invention, for example, encompasses compositions having several intermediate stages of alternating hard and elastomeric stage or compositions having several first, intermediate (elastomeric), or final stages polymerized from different monomers, as described, or from the same monomers in different proportions.

Weather stabilizers which are effective when incorporated into the composition of the elastomeric stage of the multi-stage compositions of the invention include those stabilizers selected from among at least three classes of stabilizers: hindered amines, benzotriazoles, and phenolic antioxidants. One or more stabilizers from

one or more of these classes of stabilizers, as determined by experimentation, are incorporated in the elastomeric stage. The use amount of the stabilizer which is effective in improving weather resistance also is determined by experimentation. Generally effective use level would not be likely to exceed 2 weight percent, based on the weight of the elastomeric stage. Effective levels generally are in the range of about 0.05 to about 1 weight percent and a preferred effective level ranges from about 0.05 to about 0.5 weight percent, based on the elastomeric stage.

The class of hindered amine stabilizers (also commonly termed "hindered amine light stabilizers," or "HALS") contains at least one functional groups of the formula

$$-CR_1R_2 - NX - CR_3R_4 -$$

where $R_1$, $R_2$, $R_3$, and $R_4$ may be the same or different $C_1$ - $C_4$ lower alkyl group, for example, methyl, ethyl, propyl, butyl and the like, and X is H or a $C_1$ - $C_4$ alkyl as just described. In some uses, X also may include a radical of the formula:

$$-CH_2 - CH_2 - O -, \text{ or} \rightarrow O$$

Structure of the HALS stabilizer in which the nitrogen is contained in a 6-membered, saturated (piperidinyl) ring are readily available and are preferred. Examples of HALS believed particularly effective in the invention include bis (2,2,6,6-tetramethyl-4-piperidinyl) decanedioate; bis (1,2,2,6,6-pentamethyl-4-piperidinyl) sebacate; dimethyl succinate polymer with 4-hydroxy-2,2,6,6-tetramethyl-1-piperidine ethanol; bis (1,2,2,6,6-pentamethyl-4-piperidinyl) [3,5-bis (1,1-dimethylethyl-4-hydroxyphenyl) methyl] butyl propanedioate; N,N'-bis (2,2,6,6-tetramethyl-4-piperidinyl) -1,6-hexanediamine, polymer with 2,4,6-trichloro-1,3,5-triazine and 2,4,4-trimethyl-1,2-pentanamine; N,N'-bis (2,2,6,6,-tetramethyl-4-piperidinyl)-1,6 - hexanediamine, polymer with 2,4,6-trichloro - 1,3,5 - triazine and morpholine; 1,3,5-triazine-2,4,6-triamine, N,N'''-[1,2-ethanediylbis [[[4,6-bis [butyl (1,2,2,6,6- pentamethyl-4-piperidinyl) amino]-1,3,5-triazine-2-yl] imino] -3,1 propanediyl ]]-bis [N',N"-dibutyl-N',N"-bis (1,2,2,6,6-pentamethyl-4-piperidinyl); and 8-acetyl-3-dodecyl-7,7,9,9-tetramethyl-1,3,8-triazaspiro (4,5) decane-2,4-dione.

Benzotriazoles are a generally well-known class of weather stabilizers useful in acrylic and other polymers. From this class of weather stabilizer, examples of benzotriazoles believed particularly effective in the invention include 2-(2'-hydroxy-5'-methylphenyl)benzotriazole; 2-(3'-tert-butyl-2'-hydroxy-5'-methylphenyl)-5-chlorobenzotriazole; 2-(3',5'-di-tert-butyl-2'-hydroxyphenyl)-5-chlorobenzotriazole; 2- [2-hydroxy-3,5-di-(1,1-dimethylpropyl) phenyl] -2H-benzotrizole; 2-(2'-hydroxy-5'-tert-octylphenyl) benzotriazole; and 2-[2-hydroxy-3,5-di-(1,1-dimethylbenzyl) phenyl] -2H-benzotriazole.

From the class of phenolic antioxidants, those believed particularly effective in the invention, particularly when used with a weather stabilizer from either of the previous classes (HALS and/or benzotriazoles), include hindered phenols having at least one substituent ortho to the phenolic function, as exemplified by: octadecyl 3-(3,5-di-t-butyl-4 hydroxyphenol) propionate; hexamethylene bis (3,5-di-tert-butyl-4-hydroxyhydrocinnamate); 3,5-bis (1,1-dimethylethyl)-4-hydroxybenzenepropanoic acid, 2,2-bis [[3-[3,5-bis (1,1-dimethylethyl)-4-hydroxyphenyl]-1-oxopropoxy] methyl] 1,3-propanediyl ester; thiodiethylene bis-(3,5-di-tert-butyl-4-hydroxy) hydrocinnamate; N,N'-hexamethylene bis (3,5-di-tert-butyl-4-hydroxyhydrocinnamamide); ethylene bis (oxyethylene) bis (3-tert-butyl-4-hydroxy-5-methylhydrocinnamate); tris-(3,5-di-tert-butyl-4-hydroxybenzyl) isocyanurate; 3,5-di-tert-butyl-4-hydroxyhydrocinnamic acid triester with 1,3,5-tris (2-hydroxyethyl)-S-triazine-2,4,6 (1H, 3H, 5H)-trione.

The weather stabilizers of the invention are incorporated into the elastomeric stage of the multi-stage polymer, and yield new compositions therein, by dissolution in, or co-emulsification with, one or more of the monomers of the elastomeric stage feed. Thus, the requisite amount of weather stabilizer is weighed out and mixed with the monomers to be used in preparing the elastomeric stage feed. The mixture is stored until the stabilizer is fully dissolved or dispersed in the elastomeric stage feed. The homogeneous monomer/stabilizer solution, emulsion, or dispersion is fed to the reactor before or during polymerization to form the elastomeric stage of the multi-stage polymer.

Blends of the multi-stage acrylic composition of the invention are prepared from the multi-stage acrylic composition of the invention (hereinafter termed "weatherable acrylic modifier," or, where unambiguous, just "modifier") and thermoplastic polymers, preferably thermoplastic polymers which are predominantly acrylic. Thus, the weatherable acrylic modifier of the invention is used as an additive to thermoplastic polymers. The thermoplastic polymers generally are of the same or similar polymer character and composition as the outer stage of the improved weatherable acrylic modifier. As disclosed by U.S.-A3,793,402 , it is the elastomeric stage of the sequentially produced multi-stage polymer which imparts impact resistance to its blend. The present invention extends the disclosure in that patent in the discovery that an elastomeric stage having weather stabilizer incorporated within it imparts weather resistance to its blend which is unexpectedly better than weather resistance resulting from conventional use of the same weather stabilizer.

The weather-stabilized multi-stage polymer, or "weatherable acrylic modifier," as described, is added to

a thermoplastic polymer in such proportions as desired, generally at a level or range of levels as determined by experiment to confer the desired impact and weather resisting properties. Use levels of the multi-stage polymers in the blend may range from about 5 to about 70 weight percent of the blend weight. Preferable use levels are from about 10 to about 55 wt. %, and most preferably from about 20 to about 50 wt. %.

Thermoplastic polymers which are used in blends with the weatherable acrylic modifier of the invention are polymerized from about 50 to about 100 wt. % of a predominant thermoplastic monomer selected from ($C_1$ - $C_4$)alkyl methacrylate, styrene, substituted styrene, acrylonitrile, methacrylonitrile, or combinations thereof, and from about 0 to about 50 wt. % of at least one minor thermoplastic monomer (described below). The thermoplastic polymers preferred for use in this invention are polymers and copolymers selected from predominant monomers which are ($C_1$ - $C_4$)alkyl methacrylate, more preferably a ($C_1$ - $C_2$)alkyl methacrylate, and most preferably methyl methacrylate; and minor amounts, that is, less than 50 weight percent, and more preferably 0 to 25 percent, of at least one minor thermoplastic monomer selected from ($C_5$ - $C_{12}$)alkyl methacrylates, aryl methacrylates, alkyl and aryl acrylates, alkyl and aryl acrylamides, substituted alkyl and aryl methacrylates and acrylates as may be substituted with groups such as halogen, alkoxy, alkylthio, cyanoalkyl, amino, alkylthiol esters, and other substitutions; vinyl esters, vinyl ethers, vinyl amides, vinyl ketones, vinyl halides, vinylidene halides, and olefins to provide desired balances of physical characteristics. As used here in describing the minor thermoplastic monomer units, the term "alkyl" (unless otherwise limited) encompasses aliphatic groups having from 1 to 12 carbon atoms, and includes cycloalkyl, bridged and unbridged, while the term "aryl" also includes aralkyl and alkaryl. Among the minor thermoplastic monomers which are alkyl acrylate, ($C_1$ - $C_8$)alkyl acrylate is preferred, and ethyl acrylate is most preferred. All the groups of the minor thermoplastic monomers may be substituted or unsubstituted. For example, the substituted styrenes include α-methylstyrene, vinyl toluene, halostyrene, t-butyl styrene, and the like; preferred among the styrenic monomers, however, are styrene and α-methylstyrene. The substituted acrylonitriles, for example, include methacrylonitrile, α-methylene glutaronitrile, α-ethylacrylonitrile, α-phenylacrylonitrile and the like; preferred are acrylonitrile and methacrylonitrile.

The thermoplastic polymers useful in blends of the invention have heat distortion temperatures greater than about 20°C., preferably greater than 50°C., for most general purposes.

The blends may be made by any one of several common blending methods. For example, emulsions or suspensions of the multi-stage polymers and thermoplastic polymers may be preblended before isolation. Alternatively, the multi-stage modifier first may be isolated by spray-drying and then blended with the thermoplastic polymer in a devolatilizing extruder. Any of the common methods for isolating the blends in powder or pellet form may be used. Some examples of isolation methods include spray-drying; coagulation, dewatering, and extrusion; dry blending and extrusion; wet blending and spray-drying; and the like.

Blends of the invention may be fashioned into numerous articles of use. Articles may be prepared by processes such as molding, extruding, and casting in the form of clear or pigmented films, sheets, three-dimensional objects, etc. Films and sheets are useful, for example, as overlays, protective coatings for other plastics such as capstocks, and the like. Extruded sheets may be useful as clear or pigmented glazing, outdoor or indoor signs, picture framing, sun roofs, skylights, automotive glazing, storm windows, toy parts, vending machine glazing and panels, lighting lenses, marine applications such as window glazing and other boat parts such as hulls, trim pieces and the like, and general uses where maintenance of optical properties in a weathering environment is a desired feature of the polymer blend. The blends also may be compression or injection molded into articles such as automotive parts, including for example, tail lights, side markers, decals, and pillar appliques; and containers, boxes, decorative objects, window scrapers, medical devices, and the like.

Blends of the invention also may contain lubricants, such as stearic acid, stearyl alcohol, stearyl stearamide, eicosanol, and other known lubricants; colorants, including organic dyes, organic pigments, and inorganic pigments such as titanium dioxide, cadmium sulfide, and the like; fillers and particulate extenders, such as carbon black, amorphous silica, glass fibers, magnesium carbonate, and the like; and plasticizers, such as dimethyl phthalate, dioctyl phthalate, dibenzyl phthalate, and the like. While only a few of such materials have been specifically recited, it is not intended to exclude others. The recitation is exemplary only, and each category of additives is common and known in the art, including large numbers of materials which are equally well suited for inclusion in the materials of the present invention.

To assist those skilled in the art in the practice of the present invention, the following examples and modes of operation are set forth as illustrative of the invention. Parts and percentages are by weight, unless otherwise noted. The following abbreviations are used in these examples: ALMA (allyl methacrylate), EA (ethyl acrylate), BA (butyl acrylate), BGDA (butylene glycol diacrylate), DALM (diallyl maleate), MMA (methyl methacrylate), α-MeS (α-methyl styrene), Sty (styrene), and others specifically recited in the examples below. A slash (/) is used to separate designated monomers of a single stage, and a double slash (//) is used to separate monomers of different stages or to separate the components of a blend.

## EXAMPLES

General One type of an improved weatherable multi-stage polymer ("modifier") of the invention is a hard core, three-stage core-shell modifier, exemplified below. A thermoplastic polymer for use in forming a blend with the modifier was prepared via emulsion polymerization, and is described below. Another type of improved weatherable multi-stage polymer of the invention is a soft core, four-stage core-shell modifier, and this type also is described below. The specific compositions of, and methods for preparing, the multi-stage and thermoplastic, or "matrix," polymers follow.

The modifiers for Examples 1 - 4 were synthesized in the laboratory from a base recipe (as modified, where appropriate and so indicated) for the hard-core, multi-stage polymer of Example 1 as recited in Recipe 1. Examples 2 - 4 were identical to the Example 1 polymer obtained from Recipe 1 except for the presence of weather stabilizer in the monomer mixture used in Stage II, as described below Example 5 is a commercial scale preparation of Example 1.

Example 6 describes the preparation of two acrylic thermoplastic polymers useful in forming polymer blends with, and testing the results of, weather stabilized multi-stage polymers of the invention. Recipe 2 provides details for preparation of Ex. 6A.

The modifiers for Examples 7 - 11 were synthesized in the laboratory from a base recipe (as modified, where appropriate and as indicated) for the soft-core, multi-stage polymer of Example 7 as recited in Recipe 3. Modifier Examples 8 - 11 were identical to the Example 7 polymer obtained from Recipe 3 except for the presence of weather stabilizer in the monomer mixture used in Stage II, as described below.

| Example 1 Preparation of Hard Core Multi-stage Polymer Basic Composition | |
|---|---|
| Stage I: | MMA / EA / ALMA // 95.8 / 4.0 / 0.2 |
| Stage II: | BA / Styrene / ALMA // 80.2 / 17.8 / 2.0 |
| Stage III: | MMA / EA // 96.1 / 3.9 |
| Stage Ratio: | I / II / III // 35.0 / 45.0 / 20.0 |

The polymer of Example 1 is prepared by Recipe 1.

### Recipe 1

Equipment: Resin Kettle (5L, with indented walls), equipped with condenser, a heating mantle, electric stirring motor with stainless steel stirring shaft and blade, digital temperature controller and readout, appropriate pump(s) and reservoir(s) for feeding of monomers and other components, as indicated. Abbreviations are as stated above and also include DI (deionized), NaDDBS (sodium dodecyl benzene sulfonate), NaPS (sodium persulfate).

| Stage | Charge | Component | Amount | Procedure |
|---|---|---|---|---|
| Stage I | (A) | DI Water | 1440.00g | Charge (A) to Kettle under a nitrogen sparge, heat to 75°C, stirring at 120 rpm. |
| | | $Na_2CO_3$ | 0.74g | |
| | (B) | MMA | 626.92g | After one hour, charge 15% of (B) and 20% of (C); after color change, increase stirring to 140 rpm and increase temperature to 83°C. Gradually add the balance of (B) and (C), in separate streams, over 80 minutes at 83-85°C, hold 30 minutes. Rinse each of the (B) and (C) containers with 50 ml DI Water and add rinses to the reactor. |
| | | EA | 26.17g | |
| | | ALMA | 1.31g | |
| | | 10% NaDDBS | 31.41g | |
| | | DI Water | 152.15g | |
| | (C) | NaPS | 0.40g | |
| | | DI Water | 100.00g | |
| Stage II | (D) | BA | 676.75g | With stirring at 160 rpm and reactor temperature at 85-88°C gradually add charges (D) and (E), in separate streams, over 90 minutes, hold 90 minutes. Rinse charge containers each with 25.0 ml DI Water and add to reactor. |
| | | Styrene | 150.20g | |
| | | ALMA | 16.87g | |
| | (E) | NaPS | 0.78g | |
| | | DI Water | 48.72g | |
| | | 10% NaDDBS | 40.50g | |
| Stage III | (F) | MMA | 358.52g | With stirring at 180 rpm and temp. at 86-88°C, gradually add charges (F) and (G) over 30 minutes, hold 30 minutes. Rinse each charge container with 25.0 ml DI Water and add to reactor. |
| | | EA | 14.55g | |
| | (G) | NaPS | 0.39g | |
| | | DI Water | 30.00g | Cool the batch to room temperature. Polymer solids are calculated to be 48.0 weight percent solids. |

Example 2 Hard Core Multi-stage Polymer (Ex. 1) With Weather Stabilizer

A multi-stage polymer having a hard first stage was made identically to the polymer preparation of Example 1, except that 2.53 g. of a phenolic anti-oxidant, octadecyl 3-(3,5-di-t-butyl-4-hydroxyphenyl) propionate (abbreviated "Phen 1") was added, following its dissolution in the co-monomers of Charge D, during the feed of Stage II, according to Recipe 1. The resulting emulsion of the multi-stage polymer contained 0.30 weight percent of the stabilizer in the elastomeric stage (Stage II), based on the weight of the elastomeric stage.

Example 3 Hard Core Multi-stage Polymer (Ex. 1) With Weather Stabilizer

A multi-stage polymer having a hard first stage was made identically to the polymer preparation of Example 1, except that 2.53 g. of the same phenolic anti-oxidant of Ex. 2 and 2.53 g. of the following UV stabilizer, 2-(2'-hydroxy-5'-methylphenyl)-benzotriazole (abbreviated "BZT 1") each was added, following each stabilizer dissolution in the co-monomers of Charge D, during the feed of Stage II, according to Recipe 1. The resulting emulsion of the multi-stage polymer contained 0.30 weight percent of each weather stabilizer in the elastomeric stage (Stage II), based on the weight of the elastomeric stage.

Example 4 Hard Core Multi-stage Polymer (Ex. 1) With One UV Weather Stabilizer

A. A multi-stage polymer having a hard first stage was made identically to the polymer preparation of Example 3, except that only one UV stabilizer was incorporated into the rubber stage. Thus, 2.53 g. of the UV stabilizer described in Ex. 3 (BZT 1) was added, following its dissolution in the co-monomers of Charge D, during the feed of Stage II, according to Recipe 1. The resulting emulsion of the multi-stage polymer contained 0.30 weight percent of the UV weather stabilizer in the elastomeric stage (Stage II), based on the weight of the elastomeric stage.

B. A multi-stage polymer having a hard first stage was made identically to the polymer preparation of Example 3, except that only one UV stabilizer was incorporated into the rubber stage. Thus, 2.53 g. of the following hindered amine stabilizer, bis (1,2,2,6,6-pentamethyl-4-piperidinyl) [3,5-bis (1,1-dimethylethyl-4-hydroxyphenyl) methyl] butyl-propanedioate (abbreviated "HALS 1") was added, following its dissolution in the co-monomers of Charge D, during the feed of Stage II, according to Recipe 1. The resulting emulsion of the multi-stage polymer contained 0.30 weight percent of the UV weather stabilizer in the elastomeric stage (Stage II), based on the weight of the elastomeric stage.

C. A multi-stage polymer having a hard first stage was made identically to the polymer preparation of Example 3, except that only one UV stabilizer was incorporated into the rubber stage. Thus, 2.53 g. of the following UV stabilizer, 2-(2'-hydroxy-5'-tert-octylphenyl) benzotriazole (abbreviated "BZT 2") was added, following its dissolution in the co-monomers of Charge D, during the feed of Stage II, according to Recipe 1. The resulting emulsion of the multi-stage polymer contained 0.30 weight percent of the UV weather stabilizer in the elastomeric stage (Stage II), based on the weight of the elastomeric stage.

Example 5 Example 1 Prepared on Commercial Scale

The composition of Example 1 (containing no incorporated weather stabilizer) was prepared in Plant on a commercial scale by the same procedures and charge steps of those of Recipe 1. It was sampled for control purposes in subsequent testing, as described below. Materials of the composition of Ex. 5 were identical to those of Example 1, with the exception that potassium salts of the buffer, initiator, and emulsifier were used on the commercial scale (vs the sodium salts in Ex. 1), a difference expected to have no significance in comparative testing of blends of the modifiers.

Example 6 Preparation of Thermoplastic (Matrix) Polymers

A. MMA / EA // 96 / 4

A thermoplastic polymer of the composition MMA / EA // 96.0 / 4.0 was prepared by emulsion polymerization for use in testing modifiers of the invention and of suitable controls. An emulsion of this acrylic thermoplastic polymer was prepared by Recipe 2.

Recipe 2

Equipment: Resin Kettle (5L, with indented walls), equipped with condenser, a heating mantle, electric stirring motor with stainless steel stirring shaft and blade, digital temperature controller and readout, appropriate pump(s) and reservoir(s) for feeding of monomers and other components, as indicated. Abbreviations are as stated above and also include DI (deionized), NaDDBS (sodium dodecyl benzene sulfonate), NaPS (sodium persulfate), nDDM (normal dodecyl mercaptan), DtDDS (di-tertiary dodecyl disulfide).

| | | Wt., g | Proceedure |
|---|---|---|---|
| (A) | DI Water | 1291.29 | Charge (A) to kettle, sparge with nitrogen, heat to 81-83°C with stirring at 180 rpm. |
| | $Na_2CO_3$ | 0.53 | |
| | Rinse | 25.00 | |
| (B) | Emulsion: | | After 1 hour, charge 10.0% of (B) emulsion and all of (C). Wait for exotherm. |
| | MMA | 1660.80 | |
| | EA | 69.20 | |
| | nDDM | 7.40 | |
| | DtDDS | 0.25 | After exothermic polymerization, adjust reactor temperature to 87°C. When the temperature stabilizes at 87°C, charge 20.0% of (D) and begin 3.00 hours of gradually adding remaining (B) and (D). |
| | 10.0% NaDDBS | 51.97 | |
| | DI Water | 324.72 | |
| | Rinse | 75.00 | |
| (C) | NaPS | 0.21 | |
| | DI Water | 20.00 | After feeds are in, hold at least 30 minutes before sampling for conversion solids. Additional hold may be needed to reach required 99% conversion. |
| | Rinse | 25.00 | |
| (D) | NaPS | 0.82 | |
| | DI Water | 225.00 | |
| | Rinse | 25.00 | Cool the batch to room temperature. Polymer solids are calculated to be 45.9 weight %. |

B.. MMA / EA // 99.5 / 0.5

A thermoplastic polymer of the composition: MMA / EA // 99.5 / 0.5 was prepared by procedures identical to those described for 6.A, above, for use in testing modifiers of the invention and of suitable controls. Its preparation differs from 6 A. only in that the charges in the (B) emulsion were as follows:

| | |
|---|---|
| MMA | 1721.35g |
| EA | 8.65 |
| nDDM | 6.16 |
| DtDDS | 0.35 |

The remainder of (B) emulsion charges, and all other charges and procedures of Example 6A, were as described for Example 6A. The calculated polymer solids for Example 6B were 45.9 weight percent.

| Example 7 Preparation of Soft Core Multi-stage Polymer Basic Composition | |
|---|---|
| Stage I: | BA/ Sty/ BGDA // 80.07/ 19.68/ 0.25 |
| Stage II: | BA/ Sty/ BGDA/ ALMA // 79.87/19.63/ 0.25/ 0.25 |
| Stage III: | MMA/ BA // 70.0/ 30.0 |
| Stage IV: | MMA/ BA // 85.0/ 15.0 |
| Stage Ratio: | I / II / III / IV // 15.0 / 59.0 / 16.0/ 10.0 |

The polymer of Example 7 was prepared by Recipe 3.

Recipe 3

Equipment: Resin Kettle (5L, with indented walls), equipped with condenser, a heating mantle, electric stirring motor with stainless steel stirring shaft and blade, digital temperature controller and readout, appropriate pump(s) and reservoir(s) for feeding of monomers and other components, as indicated. Abbreviations are as stated above and also include DI (deionized), NaDDBS (sodium dodecyl benzene sulfonate), NaPS (sodium persulfate).

| | | | Wt., g | |
|---|---|---|---|---|
| Stage I | (A) | DI Water | 1343.93 | Charge (A) to Kettle; nitrogen sparge for 1 hr. while heating to 83°C and stirring at 160 rpm. |
| | | $Na_2CO_3$ | 0.47 | |
| | (B) | BA | 155.74 | Charge all of mixtures (B) and (C) to the kettle, rinsing each with DI water. When exotherm begins at 83°C, shut off auxiliary air cooling. Apply air and/or ice water cooling if temperature approaches 90°C. When exotherm subsides, hold temperature at 87-88°C. |
| | | Styrene | 38.28 | |
| | | BGDA | 0.49 | |
| | | 10% NaDDBS | 12.67 | |
| | | DI Water | 45.34 | |
| | | Rinse | 25.00 | |
| | (C) | NaPS | 0.23 | |
| | | DI Water | 20.00 | |
| | | Rinse | 25.00 | |
| Stage II | (D) | BA | 612.59 | Continue stirring at 160 rpm and temperature at 87-88°C, gradually add (D) and (E) in separate streams over 3.00 hours, then rinse. Hold no more than 2.5 hours to reach >98% conversion. |
| | | Styrene | 150.57 | |
| | | ALMA | 1.92 | |
| | | BGDA | 1.92 | |
| | | Rinse | 25.00 | |
| | (E) | NaPS | 0.92 | |
| | | 10% NaDDBS | 11.50 | |
| | | DI Water | 167.57 | |
| | | Rinse | 25.00 | |

| | | | Wt., g | |
|---|---|---|---|---|
| Stage III | (F) | MMA | 145.60 | Holding temperature at 86-87°C, gradually add (F) and (G) in separate streams over 90 minutes. Hold for 90 minutes to reach 99% or higher conversion. |
| | | BA | 62.40 | |
| | | Rinse | 25.00 | |
| | (G) | NaPS | 0.26 | |
| | | 10% NaDDBS | 2.08 | |
| | | DI Water | 87.66 | |
| | | Rinse | 25.00 | |
| Stage IV | (H) | MMA | 110.50 | |
| | | BA | 19.50 | Holding temperature at 86-87°C, gradually add (H) and (I) in separate streams over 60 minutes. Hold for 60 minutes to reach 99% or higher conversion. |
| | | Rinse | 25.00 | |
| | (I) | NaPS | 0.13 | |
| | | 10% NaDDBS | 1.30 | Cool the batch. Polymer solids of the polymer latex are calculated at 40.1 weight % solids. |
| | | DI Water | 58.57 | |
| | | Rinse | 25.00 | |

Example 8 Soft Core Multi-stage Polymer (Ex. 7) With Weather Stabilizer

A multi-stage polymer having a soft first stage was made identically to the polymer preparation of Example 7, except that 2.89 g. of a UV stabilizer, 2-(2'-hydroxy-5'-methylphenyl)-benzotriazole, (BZT 1), was added, following its dissolution in the co-monomers of Charge D, during the feed of Stage II, according to Recipe 3. The resulting emulsion of the multi-stage polymer contained 0.40 weight percent of the stabilizer in the elastomeric stage (Stage II), based on the weight of the elastomeric stage.

Example 9 Soft Core Multi-stage Polymer (Ex. 7) With Weather Stabilizer

A multi-stage polymer having a soft first stage was made identically to the polymer preparation of Example 7, except that 2.89 g. of a hindered phenol anti-oxidant, octadecyl 3-(3,5-di-t-butyl-4 hydroxyphenyl) propionate, (Phen 1), and 2.89 g. of the same benzotriazole used in Ex. 8, (BZT 1), each was added following each stabilizer dissolution in the co-monomers of Charge D, during the feed of Stage II, according to Recipe 3. The resulting emulsion of the multi-stage polymer contained 0.40 weight percent of each weather stabilizer in the elastomeric stage (Stage II), based on the weight of the elastomeric stage.

Example 10 Soft Core Multi-stage Polymer (Ex. 7) With Weather Stabilizer

A multi-stage polymer having a soft first stage was made identically to the polymer preparation of Example 7, except that 2.89 g. of a hindered amine stabilizer, bis (1,2,2,6,6-pentamethyl-4-piperidinyl) [3,5-bis (1,1-dimethylethyl-4-hydroxyphenyl) methyl] butylpropanedioate, (HALS 1), was added, following its dissolution in the comonomers of Charge D, during the feed of Stage II, according to Recipe 3. The resulting emulsion of the multi-stage polymer contained 0.40 weight percent of the weather stabilizer in the elastomeric stage (Stage II), based on the weight of the elastomeric stage.

Example 11 Soft Core Multi-stage Polymer (Ex. 7) With Weather Stabilizer

A multi-stage polymer having a soft first stage was made identically to the polymer preparation of Example 7, except that 2.89 g. of a UV stabilizer, 2-(2'-hydroxy-5'-tert-octylphenyl) benzotriazole, (BZT 2), was added, following its dissolution in the comonomers of Charge D, during the feed of Stage II, according to Recipe 3. The resulting emulsion of the multi-stage polymer contained 0.40 weight percent of the weather stabilizer in the elastomeric stage (Stage II), based on the weight of the elastomeric stage.

Blending, Isolation and Processing of Sample Blends

General Modifier and matrix emulsions were blended in the polymer ratio shown by the blend sample ratios in Tables I and VI, based on polymer solids content of each emulsion polymer, or "latex." The resulting blended latex was freeze-dried followed by drying in a vacuum oven at 60°C until dry to the touch. The resulting dry powder blend was extruded in a 1" Killion extruder at 425°F (barrel and die temperatures) with a screw speed of 78 rpm. The extruded pellets were molded into ASTM parts and plaques for evaluation. The molding conditions were as follows:

| | Hard-Core Modifier Blends | Soft-Core Modifier Blends |
|---|---|---|
| Barrel and Nozzle temperatures: | 425°F | 425°F |
| Die temperature | | |
| Movable: | 200°F | 195°F |
| Stationary: | 205°F | 190°F |
| RPM: | 150 | 250-300 |
| Pressure: | | |
| Injection: | 550 psi | 400 psi |
| Back: | 50 psi | 100 psi |
| Cycle time | | |
| Injection | 15 sec | 15 sec |
| Overall: | 40 sec | 40 sec |

Table I Hard Core Modifier//Matrix Blend Compositions

| Polymer Blend Sample | Modifier [1] | Matrix [2] | Composition of Modifier [3] |
|---|---|---|---|
| 1 | Ex. 1 | Ex. 6A | Ex. 1, no weather stabilizer |
| 2 | Ex. 2 | Ex. 6A | Ex. 1 with Phen. 1 antioxidant |
| 3 | Ex. 3 | Ex. 6A | Ex. 1 with Phen. 1 and BZT 1 |
| 4A | Ex. 4A | Ex. 6A | Ex. 1 with BZT 1 |
| 4B | Ex. 4B | Ex. 6A | Ex. 1 with HALS 1 |
| 4C | Ex. 4C | Ex. 6A | Ex. 1 with BZT 2 |
| 5 | Ex. 5 | Ex. 6A | Commercial Ex. 1 (no stabilizer) |
| 6 [4] | Ex. 5-SD [5] | V920 [6] | Commercial Ex. 1 (no stabilizer) |

Notes: 1. Modifier of the Example number stated was used at a level of 40 weight percent, based on the total blend weight (modifier and matrix polymer weight).
2. Matrix polymer (a thermoplastic polymer), as indicated, was used at a level of 60 weight percent, based on the total blend weight.
3. Weather stabilizers are described in the respective modifier examples.

4. Commercial blend (Plexiglas ® DR-F, Rohm and Haas Co.) of the spray-dried modifier of Ex. 5 and V920 (note 5), prepared by extrusion blending and pelletization. Polymer blend sample 6 is "externally" weather stabilized via stabilizer in the matrix polymer, V920 (note 6). Blend sample 6 contains 0.075 wt. % BZT 1, based on the weight of the blend.
5. Example 5 -SD is the multi-stage polymer latex of Ex. 5, containing no stabilizer, spray-dried before extrusion blending with V920 (note 6).
6. V920 is a stabilizer-containing commercial product of Rohm and Haas Company; it is a thermoplastic polymer of the same composition as that of Example 6A, prepared by continuous polymerization and isolated in pellet form by extrusion devolatilization. V920 contains 0.125 wt. % BZT 1 and is the sole source of stabilizer in blend sample 6 (the blend thereby containing 0.075 wt. % stabilizer.)

In blend samples 2, 3, and 4 of Table I, the concentration of each weather stabilizer in the modifier was 0.3 wt%, based on the weight of the elastomeric stage. Based on a modifier loading of 40 wt%, and an elastomeric stage of 45 wt % of the multi-stage polymer (modifier), the weather stabilizer concentration in the blend was 0.05 wt%, based on the final blend weight. This compares with 0.075 wt. % of a weather stabilizer, as noted, in Blend Sample number 6, a commercially prepared blend product wherein the stabilizer was added by conventional blending via its "external" presence in the matrix polymer. Blend samples 1 and 5 have no weather stabilizer in either component of the blend.

Property Evaluation and Testing

Samples of the blends, following their isolation and molding as described above, were evaluated by the following standard tests: Notched Izod (ASTM Method D-256), Tensile Strength (ASTM D-638); Optical property tests included Luminous Transmittance ("LT," ASTM D-1003), Yellowness Index ( YI, ASTM D-1925), Haze (ASTM D-1003), and Heat Deflection (DTUFL, ASTM D-648). Testing and evaluation results of blend samples

are given in Tables II, III, IV, and VI.

Table II Mechanical and Optical Properties

Hard-Core Modified Blends [1]

| Blend Sample [2] | Optics LT (%) | Haze (%) | YI | Notched Izod 23°C (Joules/M) | 0°C | Tensile Test Break Stress (MPa) | Modulus (MPa) | DTUFL Annealed (°C) |
|---|---|---|---|---|---|---|---|---|
| 1 | 89.9 | 4.8 | 5.3 | 27 (2.7) | 27 (3.2) | 46 (2.1) | 1564 (40.7) | 84.7 |
| 2 | 92.1 | 2.4 | 3.4 | 53 (1.1) | 32 6.9) | 47 (.5) | 1750 (30.3) | 85.6 |
| 3 | 90.0 | 4.6 | 5.2 | 37 (3.7) | 27 (2.1) | 46 (.7) | 1847 (33.0) | 84.1 |
| 4A | 91.5 | 2.3 | 4.2 | 48 (1.6) | 32 (5.9) | 45 (3.4) | 1791 (47.5) | 86.0 |
| 5 | 91.8 | 2.0 | 3.9 | 48 (1.1) | 32 (5.9) | 47 (.7) | 1785 (39.3) | 85.3 |

Notes (Table II):
1. The numerical values in parentheses are standard deviations of the standard tests.
2. Blend Samples are described in Table I.

Table II provides a data synopsis of the mechanical and optical properties of some of the hard-core modifier based blends, measured on plaques as prepared, before accelerated weathering studies were started. Blend samples with weathering stabilizer have properties comparable to, and in some cases better than, the controls. For example, blend samples 2 and 4A show excellent luminous transmittance, low haze and low yellowness index in comparison with unstabilized blend sample 1. Blend sample 5 is a commercial blend sample with properties similar to those of the laboratory-prepared blend sample 1. The inclusion of weather stabilizer in the elastomeric stage of the multi-stage polymer ("modifier") was not detrimental to initial mechanical and optical properties.

Plaques of blend samples 1 - 6 were tested for accelerated weathering in a Xenon Arc Weatherometer. A modified xenon arc (MXA) weathering cycle was used in testing plaques, the cycle composed of alternating wet and dry spells. During the wet spell, the front face of the plaque was subjected to a water spray. The wet spell was 40 minutes long while the dry spell was 80 minutes long. The UV lamp was on continuously and the temperature was maintained at 77±2°C. One plaque of each material was withdrawn from the Weatherometer after 500, 1000, 1500, 3000, 4000, and 5000 hours. The optical properties (percent luminous transmittance (LT), percent haze, and yellowness index) of the weathered plaques were measured side by side with those of otherwise identical, but unweathered, control plaques.

Tables III and IV provide summaries of changes in the optical properties of plaques after 3000 and 5000 hours of accelerated MXA testing in the Weatherometer. The changes which are tabulated were obtained by subtracting the measured property after weathering from the measured property before weathering. (Luminous transmittance tends to decrease with weathering and yields larger negative change with increased weathering; haze and yellowness index values tend to increase with aging and yield increasingly positive changes with increased aging.) Conclusions from the tables are summarized below.

Table III Optical Properties in Accelerated Weather Testing Hard-Core Modified Blends

| | Change In LT, % MXA Hours | | Change In Haze, % MXA Hours | | Change In YI MXA Hours | |
|---|---|---|---|---|---|---|
| Blend Sample | 3000 | 5000 | 3000 | 5000 | 3000 | 5000 |
| 1 | -5.33 | -10.23 | 8.69 | 15.52 | 6.52 | 12.68 |
| 2 | -3.33 | -11.20 | 4.84 | 14.09 | 7.33 | 14.68 |
| 3 | -3.13 | -6.17 | 5.97 | 8.26 | 3.84 | 8.08 |
| 4A | -0.93 | -5.83 | 3.91 | 10.92 | 2.66 | 6.81 |
| 5 | -2.53 | -9.19 | 5.05 | 13.59 | 5.85 | 11.17 |
| 6 | -1.13 | -7.60 | 1.75 | 15.88 | 4.85 | 9.79 |

Table IV summarizes changes in optical properties after 3000 and 5000 hours in MXA accelerated weathering for a duplicate series of blend samples of those presented in Table III, and also includes accelerated weathering data for blend samples 4B and 4C which contain UV stabilizers of different structure.

Table IV Optical Properties in Accelerated Weather Testing Duplicate Study with Hard-Core Modified Blends and Samples 4B and 4C

| | Change In LT, % MXA Hours | | Change In Haze, % MXA Hours | | Change In YI MXA Hours | |
|---|---|---|---|---|---|---|
| Blend Sample | 3000 | 5000 | 3000 | 5000 | 3000 | 5000 |
| 1 | -3.09 | -8.50 | 7.63 | 16.18 | 4.54 | 9.34 |
| 2 | -1.70 | -5.30 | 5.03 | 10.39 | 3.30 | 6.86 |
| 3 | -0.74 | -3.56 | 3.84 | 9.85 | 1.42 | 4.36 |
| 4A | -0.80 | -3.32 | 2.30 | 8.65 | 1.58 | 4.45 |
| 4B | -2.07 | -4.60 | 4.28 | 11.18 | 2.83 | 6.21 |
| 4C | -1.11 | -4.13 | 3.04 | 12.16 | 1.91 | 5.09 |
| 5 | -6.12 | -12.72 | 2.98 | 8.49 | 11.52 | 19.43 |
| 6 | -2.32 | -6.73 | 5.15 | 14.28 | 3.84 | 9.22 |

The luminous transmittance (LT) data of Tables III and IV show that, as a function of time of accelerated MXA weathering, the change in LT is significantly less than in a conventionally stabilized control (#6) when the modifier having stabilizer present in the elastomeric stage contains a UV weather stabilizer, a phenolic weather stabilizer, or a mixture of UV weather stabilizer and a phenolic weather stabilizer. The data for Percent Haze and Yellowness Index show that those blend samples with either UV stabilizer alone (4A-C) or a combination of UV stabilizer and phenolic stabilizer (3) have the best yellowing weathering performance and good comparative haze behavior. All properties are better than those of the blend sample containing a UV stabilizer added by conventional (external) means. Thus, although the conventionally stabilized blend sample 6 was the next best sample from the transmittance and yellowness index point of view, its percent haze was among the highest of all the samples. The two unstabilized blend controls (1 and 5) performed relatively poorly in all the tests, as expected. In comparison, samples with only a "UV stabilizer", e.g. blend samples 4A - 4C, incorporated in the elastomeric stage of the modifier component of the blend showed significant improvement in weather stabilization over the conventional blend sample 6 in which a higher level of UV stabilizer was "externally" present (blend 6) via conventional stabilizer incorporation via stabilizer inclusion in the matrix polymer.

Table V provides a summary of polymer blend samples containing the modifiers prepared in Examples 7 - 11 and acrylic matrix polymer prepared in Example 6B.

Table V Soft Core Modifier//Matrix Blend Compositions

| Polymer Blend Sample | Modifier [1] | Matrix [2] | Composition of Modifier |
|---|---|---|---|
| 7 | Ex. 7 | Ex. 6B | Ex. 7, no stabilizer in modifier [3] |
| 8 | Ex. 8 | Ex. 6B | Ex. 7 with BZT 1 |
| 9 | Ex. 9 | Ex. 6B | Ex. 7 with Phen. 1 and BZT 1 |
| 10 | Ex. 10 | Ex. 6B | Ex. 7 with HALS 1 |
| 11 | Ex. 11 | Ex. 6B | Ex. 7 with BZT 2 |

Notes: 1. Modifier of the Example number stated was used at a level of 40 weight percent, based on the total blend weight (modifier and matrix polymer).
2. Matrix polymer (a thermoplastic polymer), as indicated, was used at a level of 60 weight percent, based on the total blend weight.
3. Although Modifier Ex. 7 contained no weather stabilizer, the polymer blend sample 7 does. Benzotriazole stabilizer (BZT 1) was "externally" present in polymer blend sample 7 via conventional addition of the stabilizer during extruder melt-blending of the co-freeze dried modifier (Ex. 7)/matrix (Ex 6B) powder mixture. Stabilizer so added was present in polymer blend sample 7 at 0.075 wt. % of the blend weight.

Plaques of each of blend samples 7 - 11 were prepared by blending the respective emulsion polymers at the indicated 40/60 polymer solids ratio, co-isolating the components by freeze-drying, and injection molding as described above. For blend samples 7 - 11, the dried components were extended with brown pigment before injection molding. (The brown pigment used had a Color Index designation of "Pigment Brown 23," a disazo condensation pigment available as Cromophthal Brown 5R from Ciba-Geigy Co. The pigment was used at 0.73 wt. % on the blend weight and was added as a concentrate of 50 % Cromophthal Brown 5R in a carrier polymer. Here, a commercially available methacrylate copolymer, Acryloid ™ B-66, available from Rohm and Haas Co., was used as a pigment carrier.) Stabilizer use level is 0.088 weight % of the polymer blend weight in blend samples 8 - 11 and 0.075 wt. % in the test control, blend sample 7. The resulting brown, opaque plaques were subjected to accelerated weather testing in the Modified Xenon Arc cycle previously described. One plaque of each blend was withdrawn from the Weatherometer after 500, 1000, 1500, 3000, 4000, and 5000 hours. The optical properties of the opaque weathered plaques were measured side by side with those of a set of opaque unweathered controls. Table VI provides a summary of Delta E values for the opaque polymer blend plaques after 1000, 3000 and 5000 hours of exposure in the Weatherometer. The data summarize color change in terms of Delta E, the square root of the sum of squares of Delta L, Delta a, and Delta b as measured in the Hunter L, a, b coordinate system (ASTM method D-2244).

Table VI Optical Properties in Accelerated Weather Testing Soft-Core Modified Blends

| | Hunter Delta E Values at | | |
|---|---|---|---|
| Polymer Blend Sample | 1000 hours | 3000 hours | 5000 hours |
| 7 | 2.75 | 2.45 | 3.71 |
| 8 | 2.72 | 2.69 | 3.60 |
| 9 | 3.18 | 2.80 | 4.14 |
| 10 | 2.62 | 2.45 | 3.52 |
| 11 | 1.77 | 2.26 | 3.30 |

The data in Table VI show that blends containing modifiers that have UV weather stabilizer incorporated in the elastomeric stage (blend samples 8, 10, and 11) consistently showed smaller color change (have a lower Delta E value) with time of accelerated weathering exposure in comparison to the color change resulting from a blend (blend sample 7) which contained UV weather stabilizer added conventionally (i.e. "externally") during melt-blending of the polymer blend components. Blend sample 9, containing both UV and phenolic weather stabilizers, generally weathered well but in this particular combination was not better in Delta E value than blend sample 7 containing only a UV weather stabilizer (albeit externally added.) Although the level of stabilizer in blend sample 7 was slightly lower than the levels in the elastomeric stage-containing blends (0.075 wt. % vs 0.088 wt. %, based on the polymer blend weight), the concentration factor was believed less important to the demonstrated improved weathering results than the presence of the stabilizer in the elastomeric stage of the modifier.

## Claims

**1.** A multi-stage acrylic composition, comprising:
(a) from 40 to 85 percent of acrylic elastomeric stage polymer containing from 0.05 to 2.0 percent, based on the weight of elastomeric stage polymer, of one or more weather stabilizer; and
(b) from 15 to 60 weight percent, of at least one outer stage polymer having a Tg greater than 25° C;
the percentages of (a) and (b) being based on the weight of (a) plus (b).

**2.** A composition as claimed in claim 1, further comprising (c) first stage polymer comprising polymer having Tg greater than 25° C comprising from 5 to 40 weight percent of (a) plus (b) plus (c) or polymer having Tg lower than 0° C comprising from 5 to 20 weight percent of (a) plus (b) plus (c).

**3.** A composition as claimed in claim 2 wherein:
hard stage polymer (c) is polymerized from one or more monomers, comprising: from 70 to 100 weight percent, based on the weight of (c), of ($C_1$ - $C_{18}$)alkyl, preferably ($C_1$ - $C_8$)alkyl, methacrylate or a comonomer mixture comprising at least 50 weight percent of ($C_1$ - $C_{18}$)alkyl, preferably ($C_1$ - $C_8$)alkyl, methacrylate and at least one of the monoethylenically unsaturated monomers: styrene, substituted styrene, acrylonitrile, methacrylonitrile; up to 30 weight percent of second monoethylenically unsaturated monomer; up to 5 weight percent of polyfunctional crosslinking monomer; and up to 5 weight percent of graftlinking monomer.

**4.** A composition as claimed in any preceding claim wherein the weather stabilizer-containing acrylic elastomeric stage polymer (a) is polymerized from one or more monomers, comprising from 50 to 99.9 weight percent of alkyl acrylate wherein the alkyl group contains 1 to 8, preferably 2 to 8 carbon atoms, up to 49.9 weight percent of further monoethylenically unsaturated monomer, preferably styrene and/or substituted styrene, up to 5 weight percent of polyfunctional crosslinking monomer, and 0.05 to 5.0 weight percent of graftlinking monomer; the elastomeric stage polymer being polymerized in the presence of the first stage hard polymer and characterized in that it would exhibit a Tg of 25° C or less if its monomers were polymerized in the absence of the first stage polymer; and/or
the outer stage polymer (b) is polymerized from one or more monomers, based on the weight of

the outer stage, comprising: from 70 to 100 weight percent of ($C_1$ - $C_{18}$)alkyl methacrylate or a comonomer mixture comprising at least 50 weight percent of the ($C_1$ - $C_{18}$)alkyl methacrylate and at least one of the monoethylenically unsaturated monomers: styrene, substituted styrene, acrylonitrile and methacrylonitrile; and up to 30 weight percent of further monoethylenically unsaturated monomer; the outer stage polymer being characterized in that it would exhibit a Tg greater than 25° C if the monomers were polymerized in the absence of other stages.

**5.** A composition as claimed in any of claims 2 to 4 containing hard stage polymer (c) polymerised from a monomer mixture comprising monomer selected from ($C_1$ - $C_4$)alkyl methacrylate, styrene, substituted styrene, acrylonitrile and methacrylonitrile, or soft stage polymer (c) polymerised from a monomer mixture comprising monomer selected from ethyl acrylate, n - butyl acrylate, iso - butyl acrylate and 2-ethylhexyl acrylate.

**6.** A composition as claimed in any preceding Claim wherein the weather stabilizer comprises hindered amine containing at least one functional group of the formula

$$- CR_1R_2 - NX - CR_3R_4 -$$

where $R_1$, $R_2$, $R_3$, and $R_4$ are the same or different ($C_1$ - $C_4$)alkyl group and X is H or ($C_1$ - $C_4$)alkyl, benzotriazole and/or phenolic anti-oxidant.

**7.** A composition as claimed in Claim 6 wherein: the hindered amine comprises bis (2,2,6,6-tetramethyl-4-piperidinyl) decanedioate; bis (1,2,2,6,6-pentamethyl-4-piperidinyl) sebacate; dimethyl succinate polymer with 4-hydroxy-2,2,6,6-tetramethyl-1-piperidine ethanol; bis (1,2,2,6,6-pentamethyl-4-piperidinyl) [3,5-bis (1,1-dimethylethyl-4-hydroxyphenyl) methyl] butyl propanedioate; [N,N'-bis (2,2,6,6-tetramethyl-4-piperidinyl) -1,6-hexanediamine polymer with 2,4,6-trichloro-1,3,5-triazine and 2,4,4-trimethyl-1,2-pentanamine]; [N,N'-bis (2,2,6,6,-tetramethyl-4-piperidinyl) -1,6 - hexanediamine polymer with 2,4,6 - trichloro - 1,3,5 - triazine and morpholine]; 1,3,5-triazine-2,4,6-triamine, N,N'''-[1,2-ethanediylbis [[[4,6-bis [butyl (1,2,2,6,6-pentamethyl-4-piperidinyl) amino]-1,3,5-triazine-2-yl] imino] -3,1 propanediyl ]]-bis [N',N"-dibutyl-N',N"-bis (1,2,2,6,6-pentamethyl-4-piperidinyl); or 8-acetyl-3-dodecyl-7,7,9,9-tetramethyl-1,3,8-triazaspiro (4,5) decane-2,4-dione; the benzotriazole comprises 2-(2'-hydroxy-5'-methylphenyl)-benzotriazole; 2-(3'-tert-butyl-2'-hydroxy-5'-methylphenyl)-5-chlorobenzotriazole; 2-(3',5'-di-tert-butyl-2'-hydroxyphenyl)-5-chlorobenzotriazole; 2- [2-hydroxy-3,5-di-(1,1-dimethylpropyl) phenyl] -2H-benzotriazole; 2-(2'-hydroxy-5'-tert-octylphenyl) benzotriazole; or 2-[2-hydroxy-3,5-di-(1,1-dimethylbenzyl) phenyl] -2H-benzotriazole; and/or the phenolic anti-oxidant comprises octadecyl 3-(3,5-di-t-butyl-4 hydroxyphenol) propionate; hexamethylene bis (3,5-di-tert-butyl-4-hydroxyhydrocinnamate; 3,5-bis (1,1-dimethylethyl)-4-hydroxybenzene- propanoic acid, 2,2-bis [[3-[3,5-bis (1,1-dimethylethyl)-4-hydroxyphenyl]-1-oxopropoxy] methyl] 1,3-propanediyl ester; thiodiethylene bis-(3,5-di-tert-butyl-4-hydroxy) hydrocinnamate; N,N'-hexamethylene bis (3,5-di-tert-butyl-4-hydroxy-hydrocinnamamide); ethylene bis (oxyethylene) bis (3-tert-butyl-4-hydroxy-5-methylhydrocinnamate); or tris-(3,5-di-tert-butyl-4-hydroxybenzyl) isocyanurate, 3,5-di-tert-butyl-4-hydroxyhydrocinnamic acid triester with 1,3,5-tris (2-hydroxyethyl)-S-triazine-2,4,6 (1H, 3H, 5H)-trione.

**8.** A blend comprising a composition as claimed in any preceding claim and thermoplastic polymer polymerized from 50 to 100 weight percent of ($C_1$ - $C_4$)alkyl methacrylate, styrene, substituted styrene, acrylonitrile and/or methacrylonitrile and 0 to 50 weight percent of another monomer which if polymerised alone, would yield thermoplastic homopolymer.

**9.** A blend as claimed in claim 8 wherein the thermoplastic polymer comprises units of ($C_1$ - $C_2$)alkyl methacrylate, styrene and/or substituted styrene, preferably methyl, methacrylate, and optionally, units of ($C_1$ - $C_8$)alkyl acrylate, preferably ethyl acrylate.

**10.** A shaped article such as film, sheet or injection moulded part, for example, clear glazing, pigmented glazing, a lighting fixture, automotive lense, or outdoor sign, prepared from a blend as claimed in Claim 8 or 9.